# EUROPEAN PATENT APPLICATION

(11) **EP 2 093 648 A1**
(43) Date of publication of application: **26.08.2009**
(21) Application number: 07832727.7
(22) Date of filing: 29.11.2007
(51) Int. Cl.: G06F 3/033, G01B 11/26, G01D 5/30, G06K 7/00

(54) **SPHERE ABSOLUTE ANGLE DETECTION SYSTEM, SPHERE ACTUATOR, AND POINTING DEVICE**

(30) Priority: 30.11.2006 JP 2006325009
(71) Applicant: Tamagawa Seiki Co., Ltd., Nagano 395-8515 (JP)
(72) Inventor: HAMA, Nobuharu, Aomori 039-2245 (JP)
(74) Representative: Jenkins, Peter David
(86) International application number: PCT/JP2007/073012
(87) International publication number: WO 2008/069084

(57) **Abstract**

A sphere absolute angle detecting system (1) comprises a sphere (2) to which a surface image recognition pattern (P) for detecting the absolute angle of the sphere (2) is provided and an image recognition device (3) provided outside the sphere (2) is provided and an image recognition device (3) provided outside the sphere (2). The image recognition pattern (P) can be composed by arranging element patterns (p1) such as a QR code (registered mark) on the surface of the sphere (2). The image recognition device (3) is composed of an image input unit (4) and an input image processing unit (5). From the acquired image information, absolute angle information on the sphere (2) is outputted. In such a way, the detection of the absolute angle of a sphere can be easily performed.

## Description

### Technical Field

The present invention relates to a sphere absolute angle detection system, a sphere actuator, and a pointing device, and more particularly to an absolute angle detection system or the like that can easily perform sphere absolute angle detection that has been difficult and can follow sudden movements or impacts in angle detection of a robot joint actuator or angle detection of a pointing device such as a joystick.

### Background Art

A conventionally used method for sphere angle detection includes a method using a sphere with magnetic materials sprinkled on a surface, or a method performed by directly applying a roller with an encoder to a ball.

The applicant has proposed a technique of forming a pattern with a gradation of lightness or saturation or gradations of the both on an entire sphere surface to allow angle detection (Patent Document 1). This technique is to detect the pattern with the gradation provided on the entire sphere surface as a subject to be detected, with an optical sensor. The applicant has also proposed a trackball with design in a sphere formed by laser machining to increase optical position reading performance (Patent Document 2).

[Patent Document 1]
Japanese Patent Laid-Open No. 2005-308706 "POSITION DETECTOR AND SUBJECT TO BE DETECTED"
[Patent Document 2]
Japanese Patent Laid-Open No. 2004-246648 "TRACKBALL WITH DESIGN"

### Disclosure of the Invention

### Problems to be Solved by the Invention

However, further studying patterns for indicating sphere rotation, that is, angle changes in multiple axial directions and also studying a detailed method for finally outputting angle information in the inventions by the applicant is very useful for practical use.

In view of the inventions by the applicant, the present invention has an object to provide a sphere absolute angle detection system, a sphere actuator, and a pointing device that can easily perform sphere absolute angle detection that has been difficult and can follow sudden movements or impacts.

### Means for Solving the Problems

The inventor has studied the problems and found that the problems can be solved by providing, on a sphere surface, an image recognition pattern that changes its shape visually recognized from a fixed point outside a sphere, and reached the present invention. Specifically, the invention claimed in the application as the means for solving the problems or at least the disclosed invention is as described below.

(1) A sphere absolute angle detection system including: a sphere having a two-dimensional or three-dimensional image recognition pattern for sphere absolute angle detection; and an image recognition device provided outside the sphere for processing an input image of the image recognition pattern to obtain sphere angle information.
(2) The sphere absolute angle detection system according to (1), wherein the image recognition pattern changes its shape visually recognized from a fixed point outside the sphere by free rotation around the sphere center.
(3) The sphere absolute angle detection system according to (2), wherein the image recognition pattern includes a plurality of element patterns provided in different positions on a surface of the sphere or in the sphere.
(4) The sphere absolute angle detection system according to (3), wherein at least any of a QR code® or a two-dimensional or one-dimensional bar code is used as the element pattern of the image recognition pattern.
(5) A sphere actuator having a two-dimensional or three-dimensional image recognition pattern for sphere absolute angle detection, wherein an image recognition device is provided outside for processing the image recognition pattern input as an image to obtain sphere angle information.
(6) A pointing device including: a sphere for an input operation having a two-dimensional or three-dimensional image recognition pattern for sphere absolute angle detection; and an image recognition device provided outside the sphere for processing the image recognition pattern input as an image to obtain sphere angle information.

### Advantage of the Invention

The sphere absolute angle detection system, the sphere actuator, and the pointing device according to the present invention are configured as described above. This allows sudden movements or impacts to be sufficiently followed, and allows sphere absolute angle detection to be easily performed. This can increase accuracy of angle detection of a robot joint, particularly, a sphere multi-degree-of-freedom actuator, or angle detection of a pointing device such as a joystick.

### Brief Description of the Drawings

Figure 1 illustrates an embodiment of a sphere absolute angle detection system of the present invention, in which "X" indicates an X-axis direction, "Y" indicates a Y-axis direction, and "θ" indicates a θ-axis direction;
Figure 2A is a bottom view of a sphere in the embodiment in Figure 1;
Figure 2B is a perspective view of the sphere in the embodiment in Figure 1;
Figure 3(a) is a plan view of simple plane geometric patterns as examples of images that can be used as an image recognition pattern of the system of the present invention; and
Figure 3(b) is a plan view of simple plane geometric patterns as examples of images that are less suitable for an image recognition pattern of the system of the present invention.

### Description of Symbols

- 1: sphere absolute angle detection system
- 2: sphere
- 3: image recognition device
- 4: image input unit
- 5: input image processing unit
- 6: transmission unit
- P: image recognition pattern
- p1, p2, p3, p4, p5: element pattern

### Best Mode for Carrying Out the Invention

Now, the present invention will be described in detail with reference to the drawings.

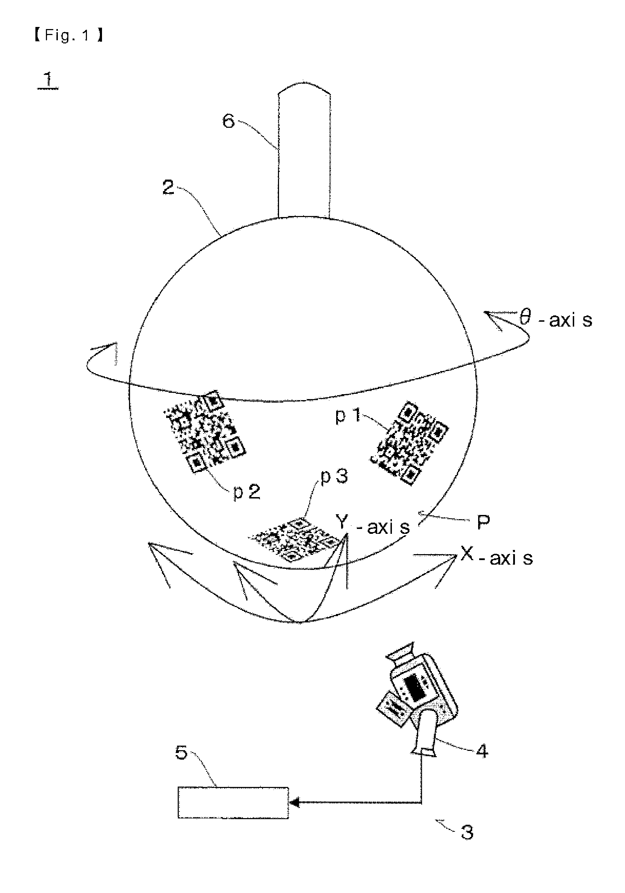

Figure 1 illustrates an embodiment of a sphere absolute angle detection system of the present invention.

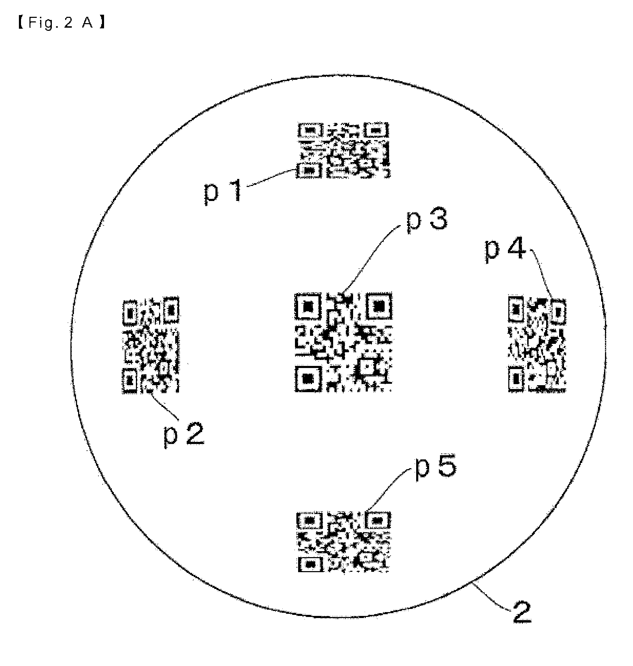

Figure 2A is a bottom view of a sphere in the embodiment in Figure 1, and

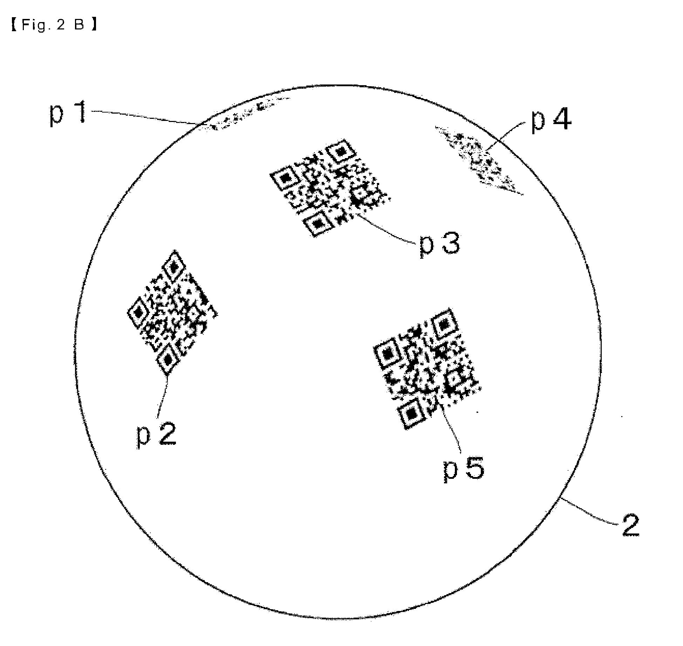

Figure 2B is a perspective view of the embodiment in Figure 1. As illustrated in the drawings, a sphere absolute angle detection system 1 of the present invention mainly includes a sphere 2 having a two-dimensional image recognition pattern P for absolute angle detection of the sphere 2, and an image recognition device 3 provided outside the sphere 2. A component denoted by reference numeral 6 is a transmission unit for transmitting rotational motion to the sphere 2.
The image recognition pattern P in the embodiment includes a plurality of curved element patterns p1, p2, p3, p4 and p5 placed on a surface of the sphere 2, and QR codes® are used as the element patterns p1 or the like. However, the image recognition pattern in the present invention is not limited to this, including the case of a single image recognition pattern rather than the case of such a plurality of element patterns as described later.
In the embodiment, the element patterns p1 or the like using the QR codes® are curved and provided on the surface of the sphere 2 as described above, but are shown in a planer shape in the drawings for convenience. As described later, a planar pattern provided in a transparent ball or the like is also covered by the present invention.

The image recognition pattern in the present invention may be the curved pattern on the sphere surface as shown, or may be a two-dimensional, curved, or three-dimensional image recognition pattern provided in a sphere, which is made of a transparent material or a material capable of transmitting electromagnetic waves that can be recognized by the image recognition device.

As shown, the image recognition device 3 includes an image input unit 4 to which an image of the image recognition pattern P is input, and an input image processing unit 5 for finally converting the input image into angle information and outputting the information. In the drawing, the image recognition device 3 includes a video camera or a TV camera as the image input unit 4 and a device connected to the video camera or the like as the input image processing unit 5, but not limited to this, the image input unit and the input image processing unit may be formed integrally or in one casing. The image recognition device may include a MOS solid-state image sensor or a CCD as an image input unit.

The image recognition device in this application generally refers to a device that can perform required digitization, correction, and feature extraction of an input analogue image, then perform image identification and calculation based on a standard pattern related to absolute angles in X-axis, Y-axis, and θ-axis directions of the sphere, and finally output absolute angle information.

With such a configuration, in the system 1, rotation information of the sphere 2 that can be grasped as synthesized angle changes in the X-axis, Y-axis, and θ-axis directions is input and obtained by an image of the image recognition pattern P provided on the sphere 2 being input and obtained by the image input unit 4 of the image recognition device 3. The input image is subjected to predetermined digitization, correction, and feature extraction, and then subjected to image identification and calculation based on a standard pattern related to the absolute angles in the X-axis, the Y-axis, and the θ-axis directions of the sphere in the input image processing unit 5, and absolute angle information of the sphere 2, that is, the absolute angles of the sphere 2 in the X-axis, Y-axis, and θ-axis directions are finally output.

As the image recognition pattern in the present invention, a pattern is used that changes its shape visually recognized from a fixed point outside the sphere 2 by free rotation of the sphere around the sphere center. Specifically, the free rotation of the sphere 2 around the sphere center causes an angle change at least in any of the three axial directions: the X-axis, Y-axis, and θ-axis directions, and the angle change needs to be recognized by the image input unit 4 as a change in an image shape in the image recognition pattern.

Describing this according to the embodiment in the above mentioned drawings, the image recognition pattern P including the element patterns p1 and p5 is configured as a pattern that changes its shape visually recognized by the image input unit 4 as a fixed point outside the sphere 2 by free rotation of the sphere 2 around the sphere center.

The image recognition pattern in the present invention may include a plurality of element patterns using QR codes® as in the embodiment described with reference to the drawings, an image recognition pattern using a single QR code®, or a two-dimensional or one-dimensional bar code. Various kinds of information can be recorded in the codes, and thus, for example, production data, quality data, or maintenance data of the sphere absolute angle detection system or a master device to which the system is applied can be encoded. The fields and contents of information that can be encoded in the codes are not limited to them.

When the image recognition pattern is provided on the sphere surface, a range on the sphere surface covered with the pattern is a range of rotation of the sphere, that is, a range covering angle change ranges in the X-axis, Y-axis and θ-axis directions. A variable angle area changes according to whether the system of the present invention is applied to a sphere actuator or a pointing device such as a joystick, and thus the image recognition pattern is provided in a wide range that can at least cover a range required for sphere absolute angle detection of the applied device.

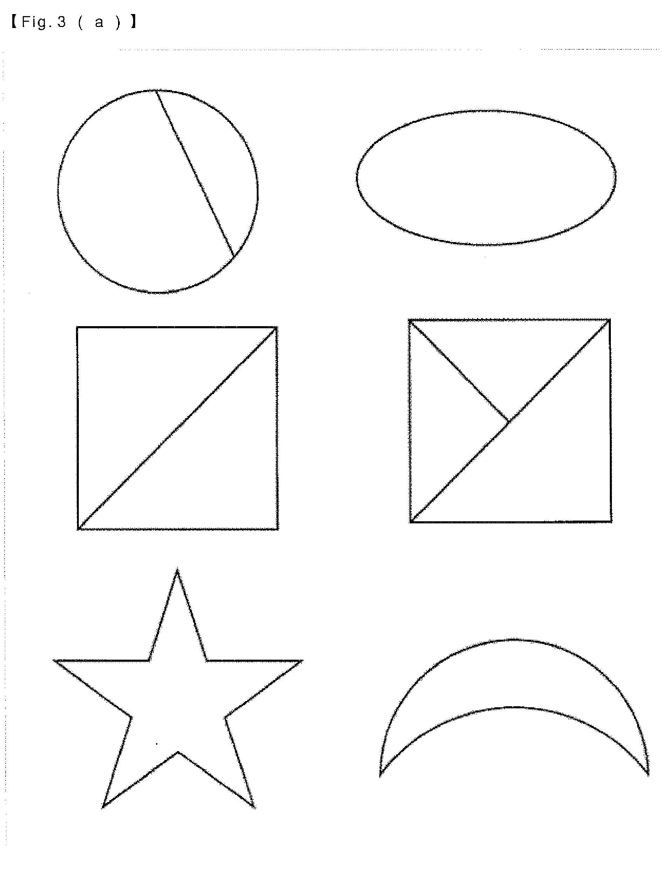

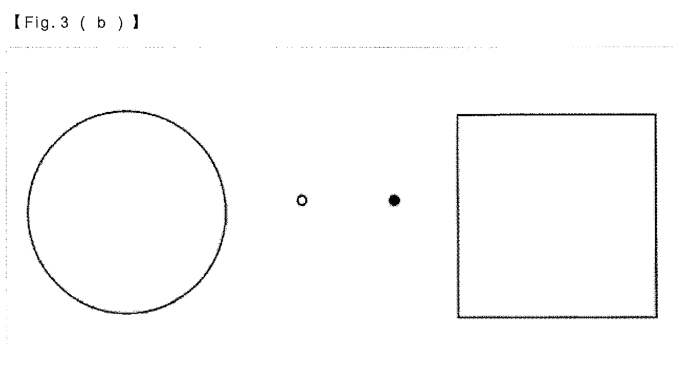

Figure 3(a) is a plan view of simple plane geometric patterns as examples of images that can be used as an image recognition pattern of the system of the present invention besides the QR code® or the like described above. Figure 3(b) is a plan view of simple plane geometric patterns as examples of images that are less suitable for an image recognition pattern of the system of the present invention. As shown, most of the simple geometric patterns can be used as image recognition patterns in the present invention unless the patterns have extremely simple configurations as in Figure 3(b).

Further, more complicated geometric patterns, symbols or characters, texts, scores, pictures, three-dimensional patterns, or three-dimensional models may be used as an image recognition pattern in the present invention. A pattern with a gradation according to the former patent application by the applicant, or a three-dimensional pattern provided by laser machining in a transparent sphere may be, of course, used as an image recognition pattern of the present invention.

For the geometric patterns, symbols or characters, texts, scores, pictures, three-dimensional patterns, or three-dimensional models that can be used as the image recognition pattern, a method of use or a final form or mode by the use is not limited, such as whether the patterns are used as element patterns or a single image recognition pattern, or a detailed configuration method when the patterns are used as the element patterns.

As described above, the sphere having the image recognition pattern is used as a component of a sphere actuator, and the image recognition device provided outside the sphere is used, thereby configuring a sphere actuator that can perform sphere absolute angle detection.

As described above, the sphere having the image recognition pattern is used as a sphere for an input operation, and the image recognition device provided outside the sphere is used, thereby configuring a pointing device such as a joystick that can perform sphere absolute angle detection.

### Industrial Applicability

The absolute angle detection system, the sphere actuator, and the pointing device according to the present invention can easily perform sphere absolute angle detection accommodating sudden movements or impacts. This can increase accuracy of angle detection of a robot joint, particularly, a sphere multi-degree-of-freedom actuator, or angle detection of a pointing device such as a joystick, and thus the present invention has many uses in industry.

## Claims

1. A sphere absolute angle detection system comprising:
a sphere having a two-dimensional or three-dimensional image recognition pattern for sphere absolute angle detection; and
an image recognition device provided outside said sphere for processing an input image of said image recognition pattern to obtain sphere angle information.

2. The sphere absolute angle detection system according to claim 1, **characterized in that** said image recognition pattern changes its shape visually recognized from a fixed point outside said sphere by free rotation around the sphere center.

3. The sphere absolute angle detection system according to claim 2, **characterized in that** said image recognition pattern includes a plurality of element patterns provided in different positions on a surface of said sphere or in said sphere.

4. The sphere absolute angle detection system according to claim 3, **characterized in that** at least any of a QR code® or a two-dimensional or one-dimensional bar code is used as the element pattern of said image recognition pattern.

5. A sphere actuator having a two-dimensional or three-dimensional image recognition pattern for sphere absolute angle detection,
**characterized in that** an image recognition device is provided outside for processing said image recognition pattern input as an image to obtain sphere angle information.

6. A pointing device **characterized by** comprising:
a sphere for an input operation having a two-dimensional or three-dimensional image recognition pattern for sphere absolute angle detection; and
an image recognition device provided outside said sphere for processing said image recognition pattern input as an image to obtain sphere angle information.
